# EUROPÄISCHE PATENTSCHRIFT

(11) **EP 1 777 903 B1**
(45) Veröffentlichungstag und Bekanntmachung des Hinweises auf die Patenterteilung: **07.10.2009**
(21) Anmeldenummer: 05109695.6
(22) Anmeldetag: 18.10.2005
(51) Int. Cl.: H04L 25/02, G08B 17/00

(54) **Verfahren und Vorrichtung zur Übertragung von Energie und Daten zwischen einer Zentraleinheit und einem Knoten**
Method and device for transmission of power and data between a central unit and a node
Procédé et dispositif de transmission d'énergie et des données entre une unité centrale et un noeud

(43) Veröffentlichungstag der Anmeldung: 25.04.2007
(73) Patentinhaber: SIEMENS AKTIENGESELLSCHAFT, 80333 München (DE)
(72) Erfinder: Tüsel, Andreas, 8122 Binz (CH)

(56) Entgegenhaltungen:
- DE-C1- 4 425 250
- US-A- 4 926 158
- US-A- 5 148 144
- US-A- 5 928 344

## Beschreibung

Die Erfindung beschreibt ein Verfahren, eine Schaltungsanordnung und ein System zum Austausch von Daten und zur Stromversorgung mindestens einer über mindestens ein Datenleitungspaar mit einer Brandmeldezentrale verbundenen Strom-Senke.

Die US 5928344 beschreibt einen seriellen Datenbus. Der Bus mit einer Zweidrahtleitung und einer Mehrzahl von Busknoten dient zum Austausch von Datentelegrammen zwischen den Busknoten und einer an den Bus angeschlossenen Zentrale und umgekehrt und zur Stromversorgung der Knoten. Konflikte zwischen gleichzeitig auftretenden Datentelegrammen werden anhand von deren Priorität gelöst. Der Bus ist in der Art eines Multimastersystem ausgebildet, bei welchem jeder Knoten und die Zentrale ein Master ist und die Zentrale den Bustakt liefert und die Synchronisation des Busses steuert. Jede Bitübertragung ist in eine positive und eine negative Phase aufgeteilt, wobei in der positiven Phase die Stromversorgung der Knoten und in der negativen Phase die Datenübertragung erfolgt. Der Bus wird vorzugsweise für ein Gefahrenmeldesystem verwendet, wobei die Knoten einen Mikrocontroller aufweisen und entweder durch spezielle Melder mit integriertem Bus gebildet sind oder ein Interface zum Anschluss der Melder aufweisen. Busprotokoll und Bustiming werden so auf die Mikrocontroller abgestimmt, dass diese die Busbedienung übernehmen können.

Die US 5148144 beschreibt ein Datenkommunikationsnetz, welches für die Datenübertragung und der Speisung von angeschlossen Netzknoten mit Strom über die gleichen Kabelbündel verwendet wird. Jeder Netzknoten ist mit einem Transformator verbunden, der einen Kern, eine Primärwicklung und eine Sekundärwicklung aufweist. Die Sekundärwicklung hat einen centertap-Anschluß, der entweder den Strom in der Sekundärwicklung aufspaltet oder vermischt, um einen Netto-DC-Fluß innerhalb des Transformators zu beseitigen. Ein DC/DC-Konverter wird für die verhältnismäßig hohe DC-Spannung des Kabels zum umwandeln verwendet. Der Konverter wird zwischen dem centertap des Transformators und dem Kabelbündel verbunden. Eine Energiequelle liefert die DC-Spannung.

Gefahrenmeldesysteme, wie zum Beispiel Meldesysteme für Feuer, Gas, Temperatur etc. bestehen meist aus Detektoren, die mit einer Zentrale verbunden sind. Solche Gefahrenmeldesysteme werden in öffentlichen Gebäuden, Bürogebäuden, Hotels, Industriegebäuden, Flughäfen, Bahnhöfen, Werkstätten, Schulen etc. eingesetzt. Wird ein Alarm an einem der Detektoren ausgelöst, wird die Zentrale benachrichtigt. Die Funktionen der Zentrale sind frei parametrierbar und unterstützen eine dem zu überwachenden Objekt angepasste Alarmorganisation. Solche Zentralen besitzen meist ein integriertes Bedienteil mit einer graphischen Anzeige und Schnittstellen zu Kommunikationsnetzen. Bei diesen Zentralen bzw. bei Brandmeldezentralen werden Brandmelder, Anzeigenelemente etc. über ein Datenleitungspaar, dem so genannten Melderbus mit der Brandmeldezentrale verbunden. Dabei gibt es so genannte Stich- und Loopleitungen. Die Stromversorgung von Strom-Senken wie zum Beispiel graphische Bedienelemente auf den einzelnen Stockwerken eines Gebäudes, Überwachungskameras, graphische Anzeigen, Steuerungs-Relais für zum Beispiel das Öffnen und Schließen von Türen, Fenstern etc., die einen Stromverbrauch größer als 20 mA haben, geschieht über separate Stromleitungen. Zur Datenübertragung müssen die Strom-Senken dann nochmals über Datenleitungen mit der Brandmeldezentrale verbunden werden.

Die Aufgabe der Erfindung ist darin zu sehen, dass eine möglichst einfache und effiziente Möglichkeit zur Stromversorgung einer Strom-Senke und zum Datenaustausch mit einer Brandmeldezentrale über ein Datenleitungspaar vorgeschlagen wird.

Die Aufgabe wird erfindungsgemäß jeweils durch die Gegenstände der unabhängigen Patentansprüche gelöst. Weiterbildungen der Erfindung sind in den Unteransprüchen angegeben.

Ein Kern der Erfindung ist darin zu sehen, dass zum Austausch von Daten und zur Stromversorgung mindestens einer über mindestens ein Datenleitungspaar mit einer Brandmeldezentrale verbundenen Strom-Senke, die einen Stromverbrauch von mehr als 20mA hat, als Speise-Spannung für die über das mindestens eine Datenleitungspaar verbundene Strom-Senke eine gepulste Spannung verwendet wird. Für eine derart gepulste Spannung wird entweder eine getaktete Gleichspannung oder eine Wechselspannung verwendet. Zwischen zwei Spannungsimpulsen werden Nutzdaten zur Brandmeldezentrale übermittelt. Daten können erfindungsgemäss Nutz- und Signalisierungsdaten sein. Die notwendige Spannung für die Übermittlung der Daten an die Brandmeldezentrale wird durch einen von der Speisspannung vorher geladenen Kondensator einer Schaltungsanordnung in der Strom-Senke bereitgestellt. Die erfindungsgemässe Schaltungsanordnung besteht zumindest aus einem ersten DC/DC-Wandler, einem Kondensator und einem zweiten DC/DC-Wandler, die in der Reihe hintereinander geschaltet sind. Ausserdem wird durch den ersten DC/DC-Wandler eine Regelung der Stromaufnahme vom Melderbus erreicht. Der erste DC/DC-Wandler begrenzt die maximal zulässige Spannung am Kondensator während des Ladevorganges und begrenzt zugleich die maximale Stromaufnahme an der Zweidrahtleitung, mit Hilfe des zweiten DC/DC-Wandlers wird die Energie des Kondensators mit maximalem Wirkungsgrad entnommen, d. h. die Zeit der Energieentnahme wird maximiert. Somit dient der Kondensator als Stromquelle für die Übermittlung von Nutzdaten zur Brandmeldezentrale zwischen zwei Spannungsimpulsen wenn, auf der Zweidrahtleitung keine Energie entnommen werden darf. Als Kondensator wird idealerweise ein so genannter Gold-Cap-Kondensator in die Schaltungsanordnung integriert. Selbstverständlich könnte erfindungsgemäss jedes stromspeicherndes Element verwendet werden, das eine kurze Lade- und Entladezeit ausweist.

Ein großer Vorteil besteht darin, dass Strom-Senken, die einen hohen Stromverbrauch aufweisen, zur Stromversorgung und zum Datenaustausch über den Melderbus mit der Brandmeldezentrale verbunden werden. Damit fallen aufwendige und separate Verkabelungen weg.

Ein weiterer Vorteil besteht darin, dass die bereits in einem Gebäude vorhandene Infrastruktur für das Verbinden solcher Strom-Senken genutzt werden kann und die Strom-Senken sich wie Brandmelder, Anzeigenelemente etc. verhalten.

Zugleich besteht bei einer Loop-Verdrahtung der Vorteil einer redundanten Verhaltensweise bei einem Kurzschluss oder Unterbruch auf der Zweidrahtleitung. Sowohl für die Nutzdaten als auch für die Spannungsversorgung.

Die Erfindung wird anhand eines in einer Figur dargestellten Ausführungsbeispiels näher erläutert. Dabei zeigen
- Figur 1: eine erfindungsgemässe Brandmeldezentrale mit über Datenleitungen verbundenen Strom-Senken,
- Figur 2: ein graphisches Beispiel für eine gepulste Spannung,
- Figur 3: eine vereinfachte Schaltungsanordnung.

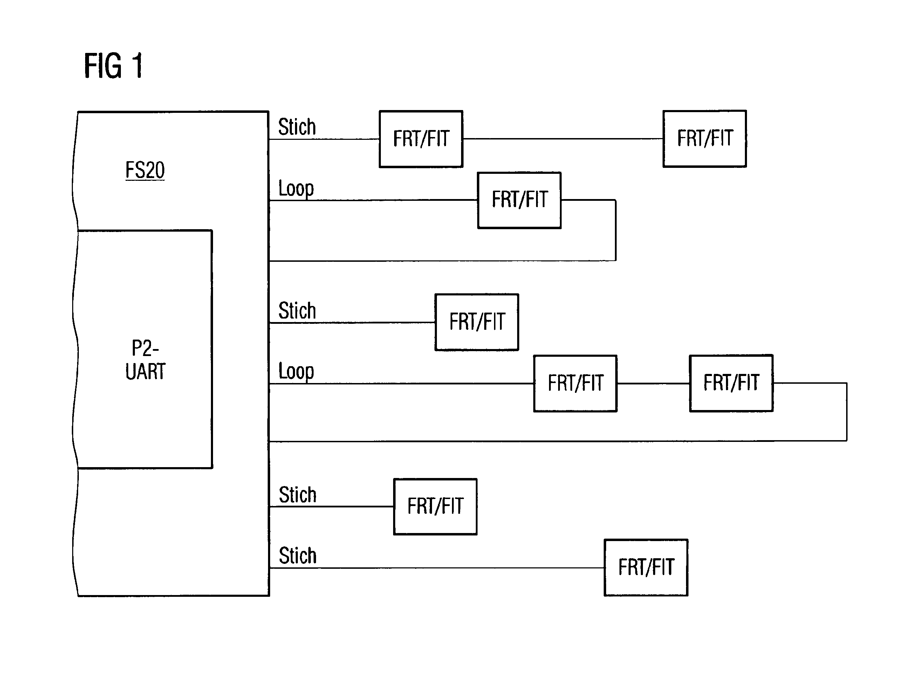

Figur 1 zeigt eine erfindungsgemässe Brandmeldezentrale FS20 mit über Datenleitungen verbundenen Strom-Senken FRT/FIT. Es können sowohl Stich- als auch Loopleitungen verwendet werden. Eine Strom-Senke FRT/FIT wird über den Melderbus, die Datenleitung, betrieben, deshalb muss es sich auch wie ein Brandmelder verhalten. Dies bedeutet, dass sich das Verhalten bei der Initialisierungsphase z.B. für den Melderbus, die Adressvergabe sowie das Redundanzverhalten im Fehlerfall identisch zu den Brandmeldern sein müssen.

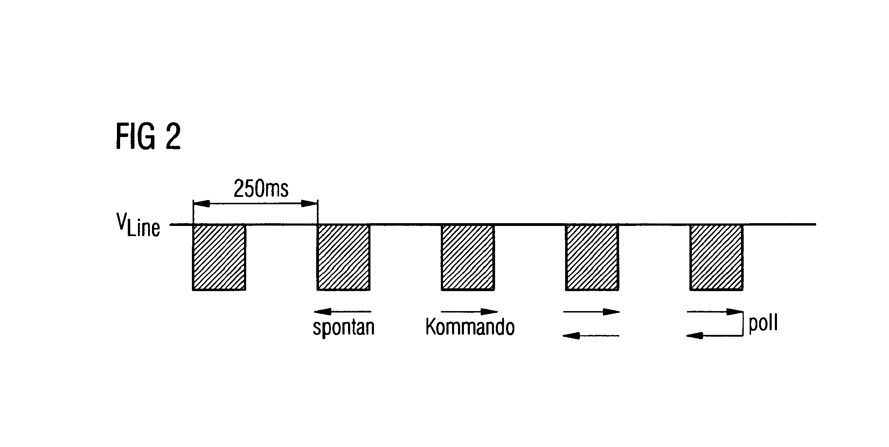

Figur 2 zeigt ein graphisches Beispiel für eine gepulste Spannung. Die Melderbuskommunikation wird in diesem Beispiel alle 250 ms ausgelöst. Ein Kommunikationsframe dauert dann etwa 125 ms. Für die Speisung der angeschlossenen Strom-Senken auf dem Melderbus bleibt in diesem Beispiel etwa 60% der Arbeitszyklusdauer übrig. Während der Kommunikation darf dem Melderbus keine Energie entnommen werden, da die Strom-Senken mittels einer Stromantwort kommunizieren. Der Beginn der Kommunikationsphase wird so durch Absenkung der Spannung auf ca. 6V eingeleitet. Die gepulste Spannung kann entweder eine getaktete Gleichspannung oder eine Wechselspannung sein.

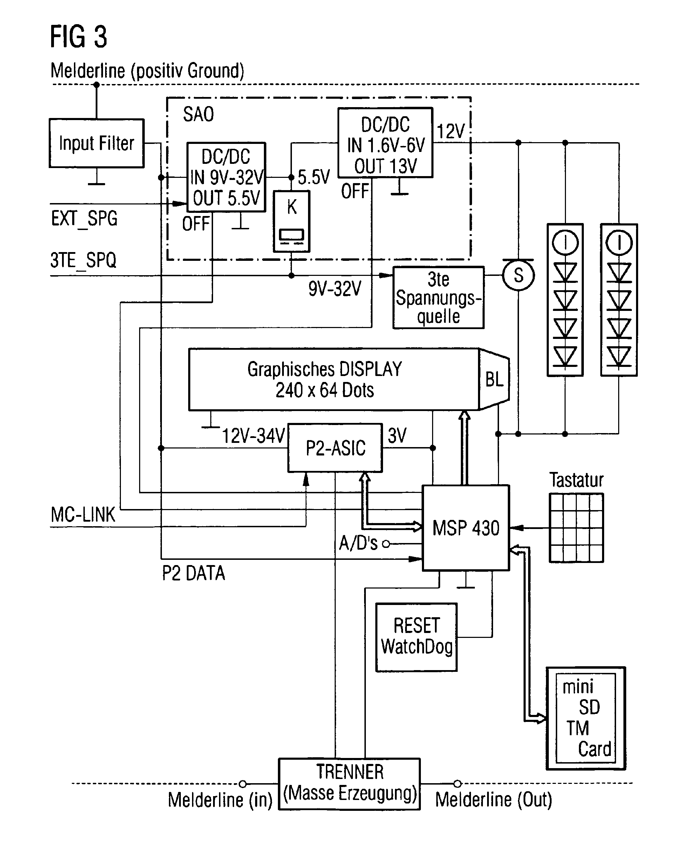

Figur 3 zeigt eine in einer Strom-Senke integrierte vereinfachte Schaltungsanordnung SAO. Eine Strom-Senke FRT/FIT wird über den Melderbus betrieben, deshalb muss es sich auch wie ein Brandmelder verhalten. Dies bedingt, dass ein Prozessor MSP zum Einsatz kommen muss. Auf diesem Prozessor MSP wird das Brandmelder-Betriebssystem betrieben, welches die Terminalapplikation aufruft. Eine Strom-Senke FRT/FIT muss viele Textmeldungen speichern können und braucht deshalb einen großen Speicher. Da der Prozessor MSP höchstens eine Speicherkapazität von 60K FLASH bzw. 10K RAM hat, ist ein Speicher-Steckplatz für zum Beispiel eine MiniSDCard vorgesehen, so lässt sich auf einfache Weise eine Speichererweiterung realisieren. Die Schaltungsanordnung SAO besteht zumindest aus einem ersten DC/DC-Wandler DC/DC, einem Kondensator K und einem zweiten DC/DC-Wandler DC/DC, die hintereinander in Reihe geschaltet sind. Sie sorgt dafür, dass zur Übermittlung von Daten zwischen zwei Spannungsimpulsen an die Brandmeldezentrale FS20 die dafür notwendige Spannung zur Verfügung gestellt wird.

## Patentansprüche

1. Verfahren zum Austausch von Daten und zur Stromversorgung mindestens einer über mindestens ein Datenleitungspaar mit einer Brandmeldezentrale (FS20) verbundenen Strom-Senke (FRT/FIT), wobei als Speise-Spannung für die über das mindestens eine Datenleitungspaar verbundene Strom-Senke (FRT/FIT) eine gepulste Spannung verwendet wird und wobei zwischen zwei Spannungsimpulsen Nutzdaten zur Brandmeldezentrale (FS20) übermittelt werden,
**dadurch gekennzeichnet,**
**dass** die für die Übermittlung der Nutzdaten an die Brandmeldezentrale (FS20) notwendige Spannung von einem von der Speisespannung vorher geladenen Kondensator (K) einer Schaltungsanordnung (SAO) in der Strom-Senke (FRT/FIT) bereitgestellt wird und dass für die Schaltungsanordnung (SAO) zumindest einen ersten DC/DC-wandler (DC/DC), einen Kondensator und einen zweiten DC/DC-Wandler (DC/DC) verwendet werden, die in der Reihe hintereinander geschaltet werden.

2. Verfahren nach Anspruch 1,
**dadurch gekennzeichnet,**
**dass** mit dem ersten DC/DC-Wandler (DC/DC) die maximal zulässige Spannung für den Kondensator (K) geregelt und die maximal zulässige Stromentnahme auf dem Melderbus begrenzt wird.

3. Verfahren nach Anspruch 1,
**dadurch gekennzeichnet,**
**dass** die Zeit der Energieabgabe des Kondensators (K) mit dem zweiten DC/DC-Wandler (DC/DC) maximiert wird.

4. Verfahren nach Anspruch 1 bis 3,
**dadurch gekennzeichnet,**
**dass** als Kondensator (K) ein Gold-Cap-Kondensator verwendet wird.

5. Verfahren nach einem der vorangegangenen Ansprüche,
**dadurch gekennzeichnet,**
**dass** als Strom-Senke (FRT/FIT) ein graphisches Bedienelement, eine Überwachungskamera, eine graphische Anzeige und/oder ein Steuerungs-Relais verwendet werden.

6. Verfahren nach Anspruch 5,
**dadurch gekennzeichnet,**
**dass** eine Strom-Senke (FRT/FIT) mit mehr als 20 mA Stromverbrauch verwendet wird.

7. Verfahren nach einem der vorangegangenen Ansprüche,
**dadurch gekennzeichnet,**
**dass** als gepulste Spannung entweder eine getaktete Gleichspannung oder eine Wechselspannung verwendet wird.

8. System zum Austausch von Daten und zur Stromversorgung mindestens einer über mindestens ein Datenleitungspaar mit einer Brandmeldezentrale (FS20) verbundenen Strom-Senke (FRT/FIT),
- mit einer Brandmeldezentrale (FS20) zur Speisung der über mindestens ein Datenleitungspaar verbundenen Strom-Senke (FRT/FIT) mit einer gepulsten Spannung,
- mit der Strom-Senke (FRT/FIT) zum Übermitteln von Nutzdaten zur Brandmeldezentrale (FS20) zwischen zwei Spannungsimpulsen, **gekennzeichnet durch**
- eine Schaltungsanordnung (SAO) in der Strom-Senke (FRT/FIT) zum Bereitstellen der für die Übermittlung der Nutzdaten notwendigen Speise-Spannung zwischen den zwei Spannungsimpulsen, wobei die Schaltungsanordnung (SAO) zumindest einen ersten DC/DC-Wandler (DC/DC), einen Kondensator und einen zweiten DC/DC-Wandler (DC/DC) aufweist, die in der Reihe hintereinander geschaltet sind.

9. Schaltungsanordnung (SAO) zum Bereitstellen der für eine Übermittlung von Nutzdaten zwischen einer Strom-Senke (FRT/FIT) und einer über mindestens ein Datenleitungspaar verbundenen Brandmeldezentrale (FS20) notwendigen Speise-Spannung, **gekennzeichnet durch**
- einen ersten DC/DC-Wandler (DC/DC) zum Begrenzen der maximalen für einen Kondensator zulässigen Spannung und Regelung der Stromaufnahme vom Melderbus,
- einen Kondensator (K) zum Abgeben der für die Übermittlung von Nutzdaten an die Brandmeldezentrale (FS20) notwendige Spannung zwischen zwei Spannungsimpulsen und
- einen zweiten DC/DC-Wandler (DC/DC) zum Maximieren der Entladedauer des Kondensators (K), wobei der erste DC/DC-Wandler (DC/DC), der Kondensator (K) und der zweite DC/DC-Wandler (DC/DC) in der Reihe hintereinander geschaltet sind.

## Claims

1. Method for exchanging data and supplying power to at least one current sink (FRT/FIT) connected via at least one data line pair to a fire alarm control unit (FS20), with pulsed voltage being used as the supply voltage for the current sink (FRT/FIT) connected via the at least one data line pair, and with useful data being transmitted to the fire alarm control unit (FS20) between two voltage pulses
**characterised in that**
the voltage required to transmit the useful data to the fire alarm control unit (FS20) is provided by a capacitor (K) of a circuit arrangement (SAO) in the current sink (FRT/FIT) charged beforehand by the supply voltage and that at least a first DC/DC converter (DC/DC), a capacitor and a second DC/DC converter (DC/DC), which are connected in series one behind the other, are used for the circuit arrangement.

2. Method according to claim 1,
**characterised in that**
the first DC/DC converter (DC/DC) is used to regulate the maximum permitted voltage for the capacitor (K) and to limit the maximum permitted voltage drawn on the alarm bus.

3. Method according to claim 1,
**characterised in that**
the second DC/DC converter (DC/DC) is used to maximize the energy output time of the capacitor (K).

4. Method according to claim 1 to 3,
**characterised in that**
a gold cap capacitor is used as the capacitor (K).

5. Method according to one of the preceding claims,
**characterised in that**
a graphic operating element, a surveillance camera, a graphic display unit and/or a control relay are used as current sinks (FRT/FIT).

6. Method according to claim 5,
**characterised in that**
a current sink (FRT/FIT) with a power consumption greater than 20 mA is used.

7. Method according to one of the preceding claims,
**characterised in that**
the pulsed voltage used is either a clocked direct voltage or an alternating voltage.

8. System for exchanging data and supplying power to at least one current sink (FRT/FIT) connected via at least one data line pair to a fire alarm control unit (FS20),
- with a fire alarm control unit (FS20) to supply the current sink (FRT/FIT) connected via at least one data line pair with a pulsed voltage,
- with the current sink (FRT/FIT) to transmit useful data to the fire alarm control unit (FS20) between two voltage pulses,
**characterized by**
- a circuit arrangement (SAO) in the current sink (FRT/FIT) to supply the supply voltage required to transmit the useful data between the two voltage pulses,
with the circuit arrangement (SAO) having at least one first DC/DC converter (DC/DC), a capacitor and a second DC/DC converter (DC/DC), which are connected in series one behind the other.

9. Circuit arrangement (SAO) to supply the supply voltage required to transmit useful data between a current sink (FRT/FIT) and a fire alarm control unit (FS20) connected via at least one data line pair,
**characterised by**
a first DC/DC converter (DC/DC) to limit the maximum permitted voltage for a capacitor and to control the power consumption of the alarm bus,
a capacitor (K) to output the voltage required to transmit useful data to the fire alarm control unit (FS20) between two voltage pulses and
a second DC/DC converter (DC/DC) to maximize the discharge time of the capacitor (K), with the first DC/DC converter (DC/DC), the capacitor (K) and the second DC/DC converter (DC/DC) being connected in series one behind the other.

## Revendications

1. Procédé destiné à l'échange de données et à l'alimentation en courant d'au moins une source négative (FRT/FIT) raccordée à une centrale de détection d'incendie (FS20) par l'intermédiaire d'au moins une paire de lignes de données, une tension pulsée étant utilisée en tant que tension d'alimentation pour la source négative (FRT/FIT) raccordée par l'intermédiaire de l'au moins une paire de lignes de données et des données utiles étant transmises à la centrale de détection d'incendie (FS20) entre deux impulsions de tension,
**caractérisé en ce**
**que** la tension nécessaire à la transmission des données utiles à la centrale de détection d'incendie (FS20) est fournie dans la source négative (FRT/FIT) par un condensateur (K), chargé auparavant avec la tension d'alimentation, d'un circuit (SAO) et en ce qu'au moins un premier convertisseur CC/CC (DC/DC), un condensateur et un second convertisseur CC/CC (DC/DC) sont utilisés pour le circuit (SAO), ceux-ci étant montés en série.

2. Procédé selon la revendication 1,
**caractérisé en ce**
**que** la tension maximale admissible pour le condensateur (K) est réglée à l'aide du premier convertisseur CC/CC (DC/DC) et en ce que le prélèvement maximal admissible du courant sur le bus du détecteur est limité.

3. Procédé selon la revendication 1,
**caractérisé en ce**
**que** le temps de la libération d'énergie du condensateur (K) est maximisé à l'aide du second convertisseur CC/CC (DC/DC).

4. Procédé selon les revendications 1 à 3,
**caractérisé en ce**
**qu'**un condensateur Gold Cap est utilisé en tant que condensateur (K).

5. Procédé selon l'une quelconque des revendications précédentes,
**caractérisé en ce**
**qu'**un élément de commande graphique, une caméra de surveillance, un afficheur graphique et/ou un relais de commande sont utilisés en tant que source négative (FRT/FIT).

6. Procédé selon la revendication 5,
**caractérisé en ce**
**qu'**une source négative (FRT/FIT) ayant une consommation de courant de plus de 20 mA est utilisé.

7. Procédé selon l'une quelconque des revendications précédentes,
**caractérisé en ce**
**que** soit une tension continue cadencée soit une tension alternative est utilisée en tant que tension pulsée.

8. Système destiné à l'échange de données et à l'alimentation en courant d'au moins une source négative (FRT/FIT) raccordée à une centrale de détection d'incendie (FS20) par l'intermédiaire d'au moins une paire de lignes de données,
- comprenant une centrale de détection d'incendie (FS20) pour l'alimentation en tension pulsée de la source négative (FRT/FIT) raccordée par l'intermédiaire d'au moins une paire de lignes de données,
- comprenant la source négative (FRT/FIT) pour la transmission de données utiles à la centrale de détection d'incendie (FS20) entre deux impulsions de tension,
**caractérisé par**
- un circuit (SAO) dans la source négative (FRT/FIT), destiné à fournir la tension d'alimentation, nécessaire à la transmission des données utiles, entre les deux impulsions de tension, le circuit (SAO) présentant au moins un premier convertisseur CC/CC (DC/DC), un condensateur et un second convertisseur CC/CC (DC/DC), ceux-ci étant montés en série.

9. Circuit (SAO) destiné à fournir la tension d'alimentation nécessaire à une transmission de données utiles entre une source négative (FRT/FIT) et une centrale de détection d'incendie (FS20) raccordée par l'intermédiaire d'au moins une paire de lignes de données, **caractérisé par**
- un premier convertisseur CC/CC (DC/DC) destiné à limiter la tension maximale admissible pour un condensateur et à régler la consommation de courant du bus du détecteur,
- un condensateur (K) destiné à libérer la tension nécessaire à la transmission de données utiles à la centrale de détection d'incendie (FS20) entre deux impulsions de tension et
- un second convertisseur CC/CC (DC/DC) destiné à maximiser la durée de décharge du condensateur (K), le premier convertisseur CC/CC (DC/DC), le condensateur (K) et le second convertisseur CC/CC (DC/DC) étant montés en série.
